# EUROPEAN PATENT APPLICATION

(11) **EP 0 875 162 A1**
(43) Date of publication of application: **04.11.1998**
(21) Application number: 97933028.9
(22) Date of filing: 25.07.1997
(51) Int. Cl.: A42B 3/12

(54) **HELMET**

(30) Priority: 26.07.1996 JP 215150/96; 24.07.1997 JP 212680/97
(71) Applicant: TS Tech Co., Ltd, Asaka-shi, Saitama 351 (JP)
(72) Inventor: MIYAJIMA, Iwao, Niiza-shi, Saitama 352 (JP); KITAHARA, Hideshi, Kawaguchi-shi, Saitama 333 (JP)
(74) Representative: Grünecker, Kinkeldey, Stockmair & Schwanhäusser Anwaltssozietät
(86) International application number: PCT/JP97/02589
(87) International publication number: WO 98/04164

(57) **Abstract**

The present invention concerns a helmet H comprising a shell 10 formed from a thermoplastic resin, for example, by blow molding or injection molding, and a shock absorbing liner 20 disposed to the inside of the shell 10. Then, the shock absorbing liner 20 is formed of polyvinylidene chloride foams. By the constitution of the shock absorbing liner 20 with polyvinylidene chloride foams, it is possible to provide a helmet having less temperature dependent change of the compression strength upon molding, is excellent in the shock absorption and restorability, excellent also in impact shock absorbing performance upon second hitting on one identical portion and also excellent in the dimensional accuracy upon manufacture.

## Description

### Technical Field

The present invention concerns a helmet and it particularly relates to a helmet which is put as a safety cap upon driving two wheeled vehicle or four wheeled vehicle playing sports in which a shock absorbing liner is improved.

### Background Art

Heretofore, a helmet has a shell on an outer side and a shock absorbing liner disposed to the inside of the shell. As the shock absorbing liner, polystyrene (PS) foams, polypropylene (PP) foams and the like have been used but PS foams have a drawback that they have scarce restorability after releasing compression upon impact shock. Further, PP foams have a drawback of causing large reduction in the compression strength at high temperature.

Further, in helmets using thermoplastic resins for the shell members, it has been difficult in view of strenghth or the like to satisfy JIS class C standards due to the foregoing drawbacks of the shock absorbing liner. Then, for satisfying the JIS class C standards, FRP of high strength is used as the shell material or the thickness of the liner is increased for coping with the problems at present.

As in the prior art, if it is coped with the use of FRP of high strength as the shell material or by the increase in the thickness of the liner, it results in drawbacks such that the shape of the helmet is enlarged, articles are made heavy, production cost is increased or user's demand can not be satisfied in view of the design.

An object of the present invention is to provide a helmet showing less temperature dependent change of the compression strength, excellent in impact absorption and restorability, excellent in the impact absorption upon second hitting on an identical portion and also excellent in a dimensional accuracy during manufacture.

Another object of the present invention is to provide a helmet having satisfactory compatibility between a shock absorbing liner and a shell and a dimensional accuracy without increasing the thickness of the shock absorbing liner and capable of easily satisfying user's demand in view of the design.

JIS class C standard will be explained here. Helmets are specifically defined in "Protective Helmets for Vehicular Users" of Japanese Industrial Standards (JIS-T 8133). Among them, a helmet includes three types; A, B, C in which A is directed to a vehicle having an exhaustion capacity of 125 cc or less, B is directed to two-wheeled automobiles according to road regulations in Japan and C concerns helmets for racing, as well as B. Regarding C, it is specified in (a) that an impact acceleration of 2945 m/s² (300, 3G) is not caused, (b) duration time is 4 ms or less if an impact shock acceleration of 1475 m/s² (150, 4G) or higher is caused.

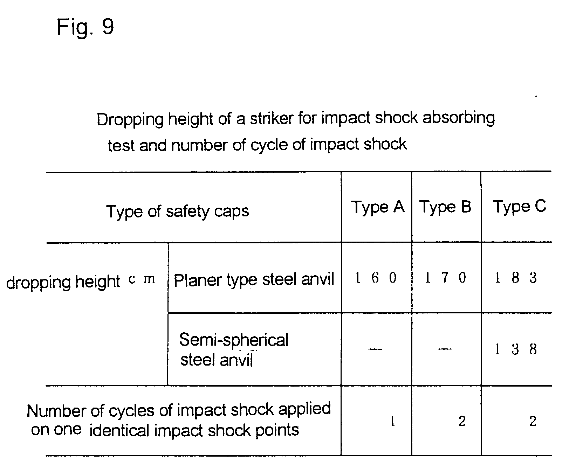

In the measurement of the impact acceleration, a striker for impact absorbing test is dropped without vibrations from the height shown in Fig. 9 and impact shock transmitted by way of a safety cap when a predetermined impact point of a specimen collides against a steel anvil is measured by an acceleration gage and a measuring recording device connected therewith, to examine whether the value satisfies the above-mentioned numerical value or not.

Measuring conditions and the like are according to Fig. 9 and the following descriptions.

While the steel anvils used in the test inspection are different depending on the type of the safety cap as shown in Fig. 9 and, in the class C safety cap, planer type steel anvils are used at two positions and semi-spherical steel anvils are used at the other two positions among four impact points of the safety cap.

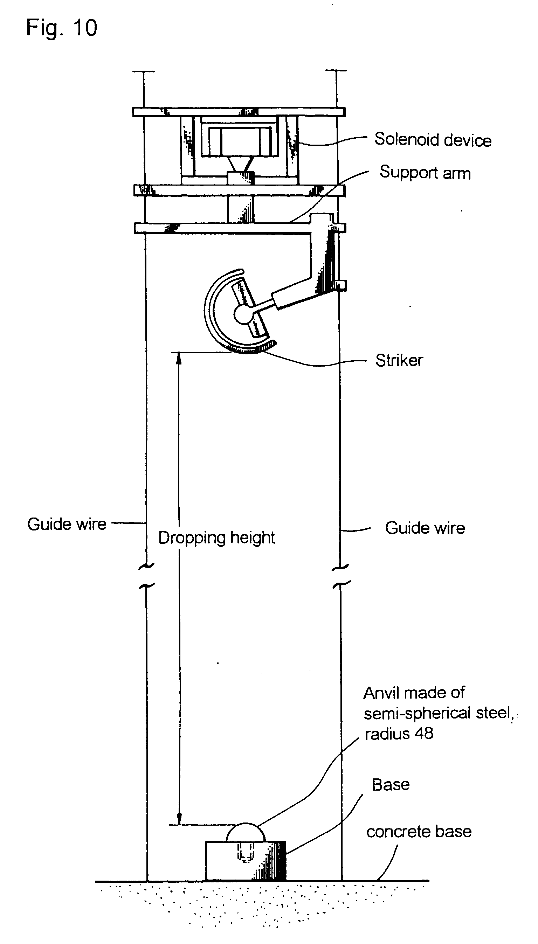

In class B and class C safety caps, the test range is defined as a portion above a head. However, a portion within 50 mm from the edge of the cap body is excluded. The impact shock points are determined at optional four positions within the test range, and the distance between each of the impact shock points is defined as 1/5 or greater for the maximum circumference of the safety cap. Further, the number of impact shocks applied on one identical impact shock point is as shown in Fig. 9. An outline of a testing device is shown in Fig. 10 to Fig. 12.

### Disclosure of the Invention

A helmet according to the present invention has a shell formed by injection molding of a thermoplastic resin and an impact shock absorption liner disposed to the inside of the shell, wherein the liner is formed with polyvinylidene chloride foams.

In this case, the liner comprising polyvinylidene chloride foams suitably has a two layered structure comprising less foamable polyvinylidene chloride foams and highly foamable polyvinylidene foams.

The present invention concerns a helmet H comprising a shell 10 and an impact shock absorbing liner 20 disposed to the inside of the shell 10, formed, for example, by blow molding or injection molding of a thermoplastic resin.

Then, the impact shock absorbing liner 20 is formed of polyvinylidene chloride foams. The liner composed of the polyvinylidene chloride foams is suitably constituted as a dual layer structure of less foaming polyvinylidene chloride foams 21 and highly foamable polyvinylidene chloride foams 22.

As described above, by constituting the shock absorbing liner 20 with polyvinylidene chloride foams, it is possible to provide a helmet H showing less temperature dependent change of a compression strength during molding, excellent in an impact shock absorption and a storability, and excellent in impact shock absorption upon second hitting on one identical portion and also excellent in a dimensional accuracy upon manufacture.

According to the present invention, since foams of polyvinylidene chloride are used as the impact shock absorbing liner, distortion during molding is small so that a liner of high dimensional accuracy can be manufactured and, in addition, foaming gases escapes scarcely from the foams, so that it is excellent in a dimensional stability a performance of stability for a long period of time.

Further, the temperature dependent change of the compression strength is small and the compression strength at high temperature is less lowered. Further, it is excellent in the restorability after releasing compression and, in particular, it is excellent in the impact shock absorption performance under condition of +50°C, and impact shock absorption upon second hitting on one identical portion and can sufficiently withstand second impact shock in the helmet in the impact shock test of JIS-T 8133 SNELL M95.

Accordingly, it is possible to provide a helmet showing less temperature dependent change of the compression strength, excellent in the impact shock absorption and the restorability, excellent in impact shock absorption performance upon second hitting on one identical portion and excellent in dimensional accuracy also manufacture, without increase of the weight, increase of the cost, increase for the thickness of the impact shock absorbing liner or the like when the shell is devised so as to maintain the strength.

Other advantages of the present invention will become apparent by the following descriptions.

### Brief Explanation of the Drawings

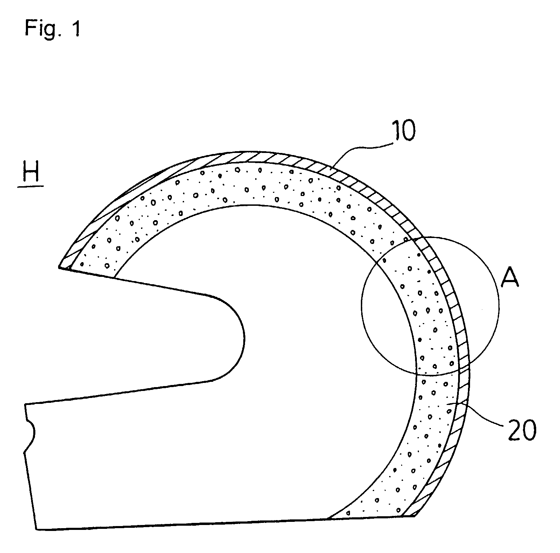

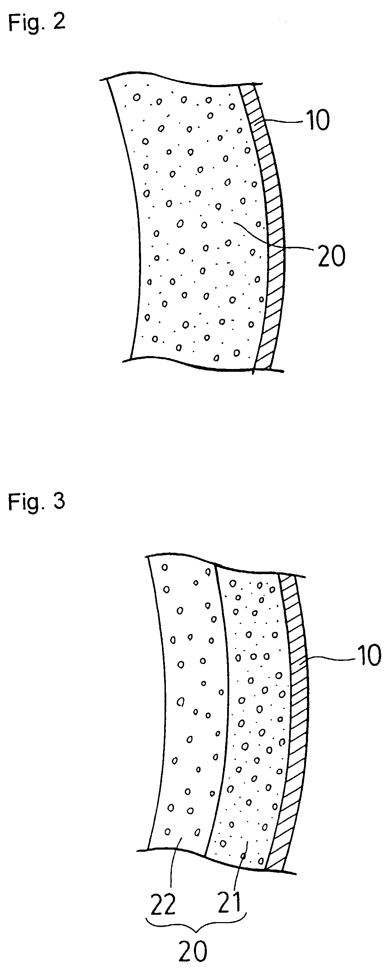

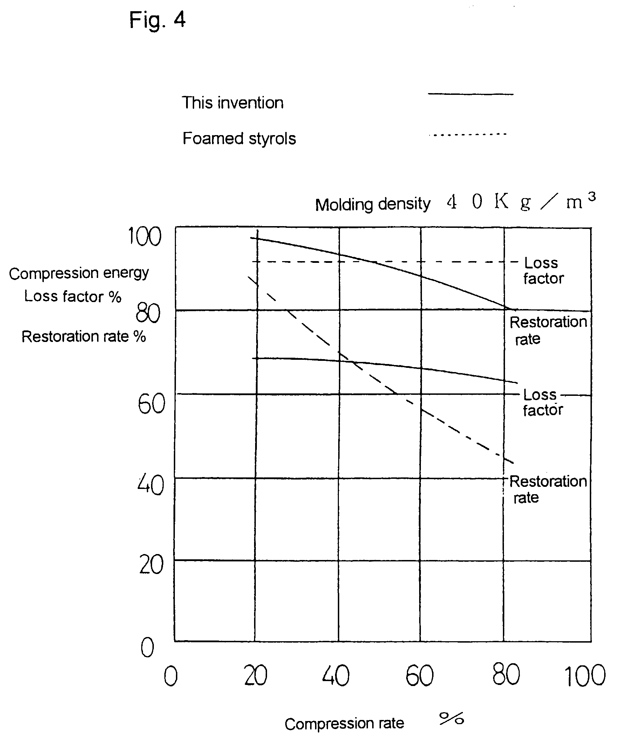

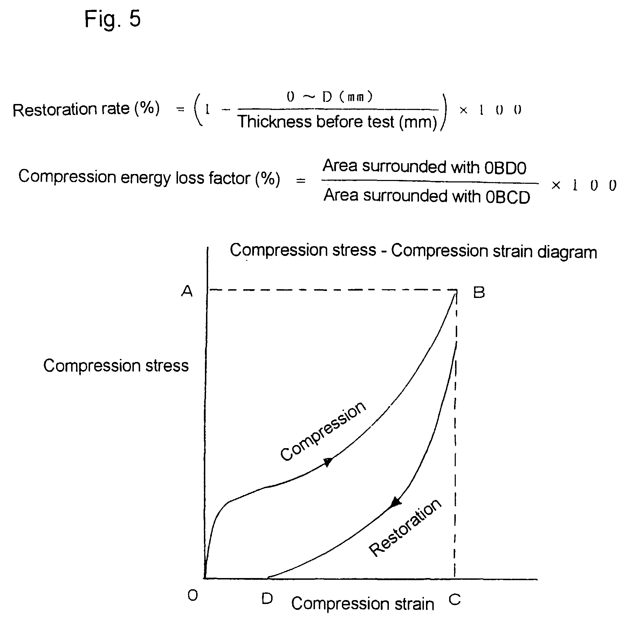

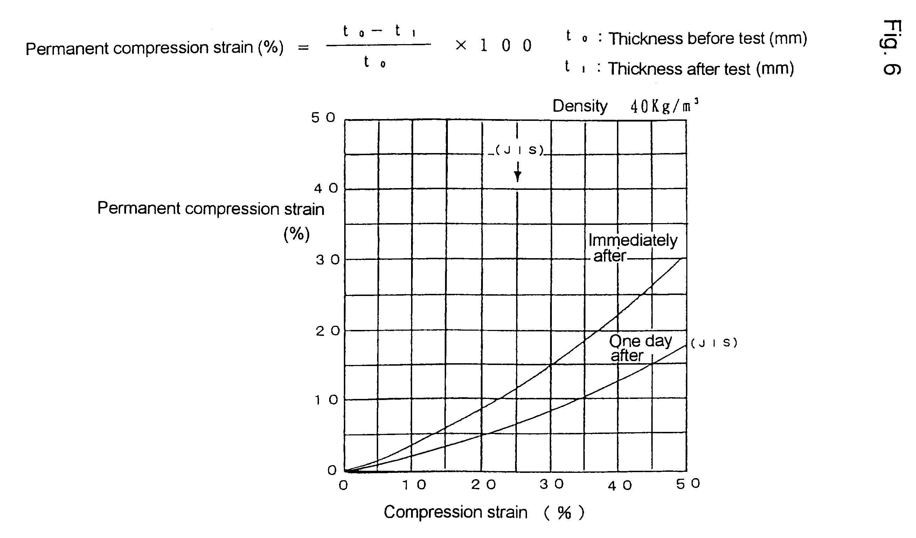

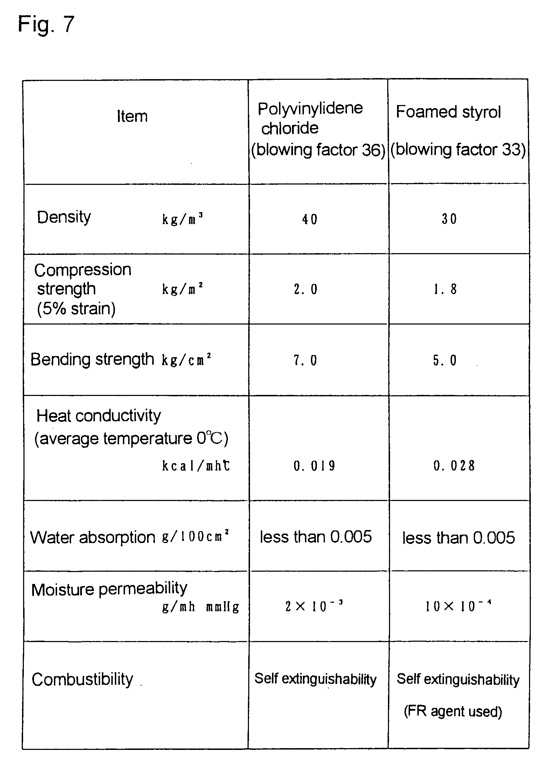

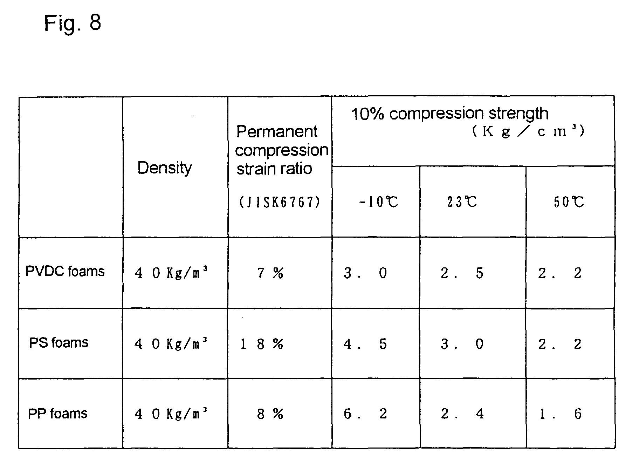

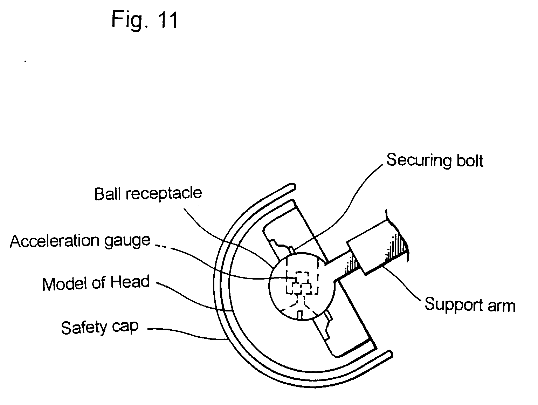

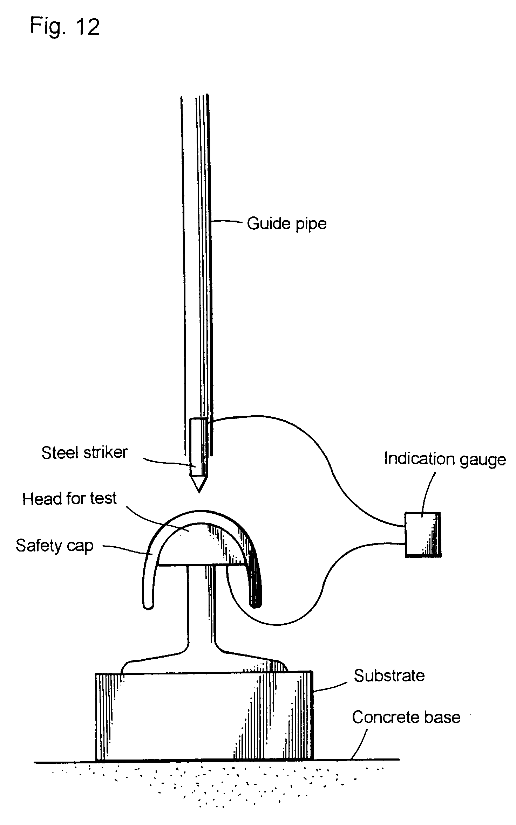

Fig. 1 is a schematic cross sectional view of a helmet according to the present invention, Fig. 2 is an enlarged cross sectional view for a portion A in Fig. 1, Fig. 3 is an enlarged cross sectional view similar to Fig. 2, showing another embodiment, Fig. 4 is a graph showing a restorability and a compression ratio of an impact shock absorbing liner according to the present invention, Fig. 5 is a diagram for a compression strength and a compression strain of an impact shock absorbing liner according to the present invention, Fig. 6 is a diagram showing a permanent compression strain of an impact absorbing liner according to the present invention, Fig. 7 is a chart for properties comparing polyvinylidene chloride foams used in this example in comparison with foamed styrol, Fig. 8 is a comparison chart for the physical properties of PVDC foams PS foams and PP foams, Fig. 9 is an explanatory view showing a dropping height and the number of cycles of impact shocks of a striker for impact shock absorbing test, Fig. 10 is an explanation view for the outside of an impact shock absorbing test device, Fig. 11 is an explanatory view for the outline of a striker for impact shock absorbing test and Fig. 12 is an explanatory view fir a penetration resistant test device.

### Best Mode for Practicing the Invention

A preferred embodiment of the present invention will be explained with reference to the drawings. Members, arrangement, and the like to be explained do not restrict the present invention and can be modified variously within the scope of the present invention.

As shown in Fig. 1, a helmet H of this embodiment is a full face type helmet in which a shell 10 is formed at the outside, and a shock absorbing liner 20 is disposed to the inside of the shell 10.

The shell 10 of this embodiment is formed into a predetermined shape from PP, ABS, PA or the like which is a thermoplastic resin by injection molding, blow molding, or similar other molding.

Then, the shock absorbing liner 20 is disposed to the inside of the shell 10. As shown in Fig. 1 and Fig. 2, the shock absorbing liner 20 in this embodiment is composed of forms having a single density of polyvinylidene chloride (PVDC) and is formed to a predetermined thickness on the inside. The shock absorbing liner 20 used in this embodiment has a density of 60 g/l, or 0.06 g/cm³ and can be manufactured by usual blow molding. Then, the shock absorbing liner 20 is constituted conforming with the inner shape of the shell 10 so as to fit to the inside of the shell 10.

The shock absorbing liner 20 as in this embodiment is satisfactory in heat insulating performance and also satisfactory in gas barrier property. That is, polyvinylidene chloride foams show less reduction of compression strength upon heating at high temperature and is excellent in the restorability after releasing from compression upon impact shock. In view of the above, it is advantageous as compared with foamed styrol upon impact shock. Then, with regard to the dimensional accuracy, it is 0.19% for polyvinylidene chloride foams according to the present invention, 0.3% for PS and 3 - 5% for PE or PP, so that it is more excellent in the dimensional accuracy of molding products compared with the material for the shock absorbing liner used conventionally. Therefore, it is possible to conform it with the shell shape and to be in intimate contact with varying shapes of shells.

As described above, when the shock absorbing liner 20 is constituted with polyvinylidene chloride foams, the thickness can be reduced remarkably compared with foamed styrol or foamed PP. The shock absorbing liner 20 of this embodiment is suitable regarding the physical properties required for helmets and, as shown in Fig. 4 to Fig. 8, it has less temperature dependent change of the compression strength, is excellent in the restorability, and resistant to compression or bending and is flexible as well. As shown in fig. 4, it is excellent in the restorability or loss factor compared with foamed styrol.

In Fig. 5, a test piece of 25 mm thickness and about 100 mm length was compressed at a rate of 10 mm/min to 25%, 50% and the 75% of the original thickness of the test piece respectively, the load was instantly removed at an identical rate, and a compression stress-compression strain graphs were measured and recorded to obtain the restorability as shown in the figure.

Further, as shown in Fig. 6, permanent compression strains was measured and calculated according to JIS K6767 specified in Japanese Industrial Standards as the test method for mechanical properties of foams. A test piece was 20 mm in thickness and about 50 mm both in length and width, which was put between two parallel flat plates (compression plates), fixed under compression to 10%, 25% and 50% of the original thickness of the test specimen, left for 22 hours, and then the test piece was taken out of the flat plates and the thickness was measured immediately thereafter or after leaving at a room temperature of 23°C for 24 hours and determined according to the equation shown in the figure.

Fig. 7 is a table for the physical properties of polyvinylidene chloride foams used in this embodiment and foamed styrol in comparison and Fig. 8 is a table for the physical properties of PVCD foams, PS foams and PP foams in comparison. As shown in the figure, PS foams have a relatively less temperature dependence such as 4.5 at -10°C and 2.2 at 50°C. However, the compression permanent strain ratio is as high as 18%. Further, PP foams have the permanent compression strain ratio as small as 8% but the temperature dependence of the compression strength is as high as 6.2 at -10°C and 1.6 at 50°C. On the contrary, polyvinylidene chloride foams (PVDC foams) show the permanent compression strain ratio of as small as 7% and, in addition, lesser temperature dependence as small as 3.0 at -10°C and 2.2 at 50°C compared with other comparative materials. Further, the heat conduction ratio is smaller compared with foamed styrols, and heat insulation is stable in helmet suffering from large temperature difference in summer and winter seasons.

Fig. 3 shows another embodiment of the present invention, which is an enlarged cross sectional view similar with Fig. 2. This embodiment shows an example in which the shock absorbing liner has two layers, with a less foaming (high density) layer 21 being disposed for a shell 10 while a highly foaming (low density) layer 22 being formed for the inside (head). The less foaming layer 21 and the highly foaming layer 22 are joined, for example, with an adhesive. As described above, PS foams are sensitive to second impact shock, and PP foams have temperature dependence. Therefore, the shock absorbing liner is dual-layered by using polyvinylidene chloride foams (PVCD foams), in which the less foaming (high density) layer 21 is formed on the shell 10 and a highly foaming (low density) layer 22 is formed for the inside (head), so that the shock absorbing performance upon second hitting on one identical portion can be made more excellent.

### Industrial Applicability

As described above, according to the helmet of the present invention, since the foams of polyvinylidene chloride are used for the shock absorbing liner, the strain upon molding is small, so that, it is possible to manufacture a liner at a high dimensional accuracy and provide a helmet of excellent assembling property with the shell.

Further, since the foams of polyvinylidene chloride show extremely less escape of foaming gas from the foams, they are excellent in the dimensional stability and performance stability for a long period of time, can ensure the performance of the helmet for a long period of time and, particularly, can ensure the degree of freedom for the design relative to user's demand in view of the design. Therefore, since this material has a sufficient strength to be used for racing as well as for ordinal use in streets, it can cope with all sorts of helmets.

## Claims

1. A helmet having a shell formed by molding of a thermoplastic resin and a shock absorbing liner disposed to the inside of the shell, in which the liner is formed of polyvinylidene chloride foams.

2. A helmet wherein the liner formed of the polyvinylidene chloride foams comprises a dual layered structure of a less foaming polyvinylidene chloride foams and highly foaming polyvinylidene chloride foams.
